# EUROPEAN PATENT APPLICATION

(11) **EP 1 152 584 A1**
(43) Date of publication of application: **07.11.2001**
(21) Application number: 01303924.3
(22) Date of filing: 30.04.2001
(51) Int. Cl.: H04M 1/05, H04B 5/00

(54) **Accessories for mobile radio transceivers such as mobile telephones**

(30) Priority: 04.05.2000 GB 0010670
(71) Applicant: Davidson, Martin Paul, Southampton, Hampshire SO32 2PW (GB)
(72) Inventor: Davidson, Martin Paul, Southampton, Hampshire SO32 2PW (GB)
(74) Representative: Targett, Kenneth Stanley

(57) **Abstract**

An accessory (12) for a mobile radio transmitter (10), such as a mobile telephone, comprises a first transducer (24,26,20), which may include a microphone, for detecting a user's voice and producing a corresponding wire-less signal, and a wire-less link (22,18) from the first transducer to a second transducer (14) for detecting the wire-less signal and producing a corresponding electrical signal for supply to an electrical input of the mobile radio transmitter. The accessory can therefore be somewhat like a conventional hands-free kit except that it uses a wire-less link rather than electrical cable, and so it is believed that the risk of brain damage caused by electromagnetic radiation transmitted from the transmitter (10) is reduced.

## Description

This invention relates to accessories for a mobile radio transmitters/transceivers such as mobile telephones. The invention was originally conceived for use with mobile telephones, but it does have other applications.

Mobile telephones transmit electromagnetic radiation at very high radio frequencies. Most mobile telephones are provided as a single unit incorporating the transmitter, earpiece and microphone, and the transmitter is therefore, in use, held against the user's head. There is growing concern that the transmitted radiation can cause brain damage to users, especially those who spend a long time on their mobile telephones. Nowadays, a hands-free kit can be obtained for many models of mobile telephone. The main telephone unit can then be carried in the pocket or handbag, or clipped to the user's waistband, so that it is used further from the user's head. The hands-free kit comprises an electrical plug which is connected to a socket on the telephone, an earpiece which is worn in the user's ear, a microphone, and electrical cable connecting the microphone and earpiece to the plug. However, it is believed that the electrical cable facilitates propagation of the electromagnetic radiation towards the user's head so that the risk of brain damage still remains.

The present invention is concerned with reducing the risk of brain damage to the user of a mobile telephone or other mobile radio transmitter.

In accordance with a first aspect of the present invention, there is provided an accessory for a mobile radio transmitter, comprising a first transducer (which may include a microphone) for detecting a user's voice and producing a corresponding wire-less signal, and a wire-less link from the first transducer to a second transducer for detecting the wire-less signal and producing a corresponding electrical signal for supply to an electrical input of the mobile radio transmitter. The accessory can therefore be somewhat like a conventional hands-free kit except that it uses a wire-less link rather than electrical cable, and so it is believed that the risk of brain damage is reduced.

In the case of first and second such accessories being used with corresponding first and second transmitters by first and second users located near to each other, if the wire-less links were broadcast links, there may be a problem with cross-talk, i.e. the second transmitter receiving the signal from the first user, and the first transmitter receiving the signal from the second user. Therefore, preferably, the wire-less link is a physically-closed point-to-point link from the first transducer to the second transducer.

The first transducer may include an electro-acoustic transducer, the wire-less link may be an acoustic link, and the second transducer may include a microphone. Alternatively, the first transducer may include an electro-optical transducer, the wire-less link may be an optical link, and the second transducer may include an opto-electrical transducer.

In the case where the accessory is for a mobile radio transceiver (i.e. transmitter and receiver, such as a mobile telephone), it preferably further comprises a third transducer for receiving an electrical signal from an electrical output of the mobile radio transceiver and producing a corresponding second wire-less signal for supply via a second wire-less link to the user's ear. Again, to prevent cross-talk, the second wire-less link is preferably a physically-closed point-to-point link from the third transducer to the user's ear.

The third transducer may include an electro-acoustic transducer, and the second wireless link may be an acoustic link direct to the user's ear. Alternatively, the third transducer may include an electro-optical transducer, the second wire-less link may be an optical link, and the accessory may further include a fourth opto-acoustic transducer fed by the wire-less link for providing a corresponding acoustic signal to the user's ear.

In order to provide the physically-closed point-to-point links mentioned above, the acoustic links may be provided by flexible tubes, and the optical links may be fibre-optic.

In accordance with other aspects of the present invention, there are provided a mobile radio transmitter and a mobile radio transceiver having an accessory according to the first aspect of the invention.

A specific embodiment of the present invention will now be described, purely by way of example, with reference to the accompanying drawings, in which:
- Figure 1: is a schematic view of a mobile telephone having an accessory fitted thereto;
- Figure 2: is a schematic view of an adapter module of the accessory of Figure 1;
- Figure 3: is a schematic view of a right earpiece module of the accessory of Figure 1;

- Figure 4: is a schematic view of a left earpiece module of the accessory of Figure 1; and
- Figure 5: is a schematic view of a mouthpiece module of the accessory of Figure 1.

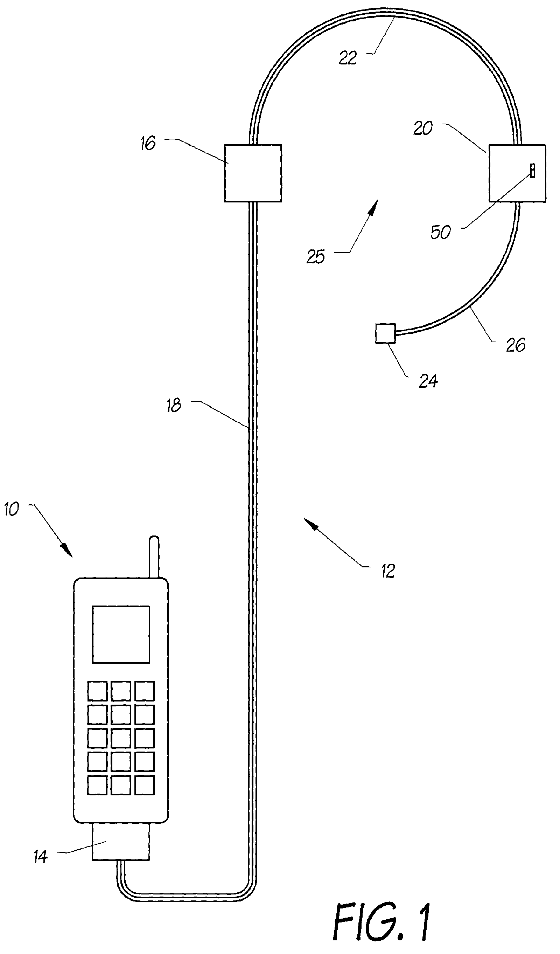

Referring to Figure 1, a mobile telephone 10 is fitted with an accessory 12. The accessory 12 comprises an adapter module 14 which is plugged into a "hands-free" socket of the mobile telephone 10. The adapter module 14 is connected to a right earpiece module 16 by a length of twin-bore flexible tube 18. The right earpiece module 16 is also connected to a left earpiece module 20 by a curved piece of springy twin-bore tube 22 or by a curved springy blade to which a length of twin-bore flexible tube is attached. The left earpiece module 20 is also connected to a mouthpiece module 24 by a length of twin-core cable 26 which can be bent to a required shape. The earpiece modules 16,20, mouthpiece module 24, springy tube 22 and cable 26 therefore form a headset 25 which can be worn by the user of the mobile telephone 10.

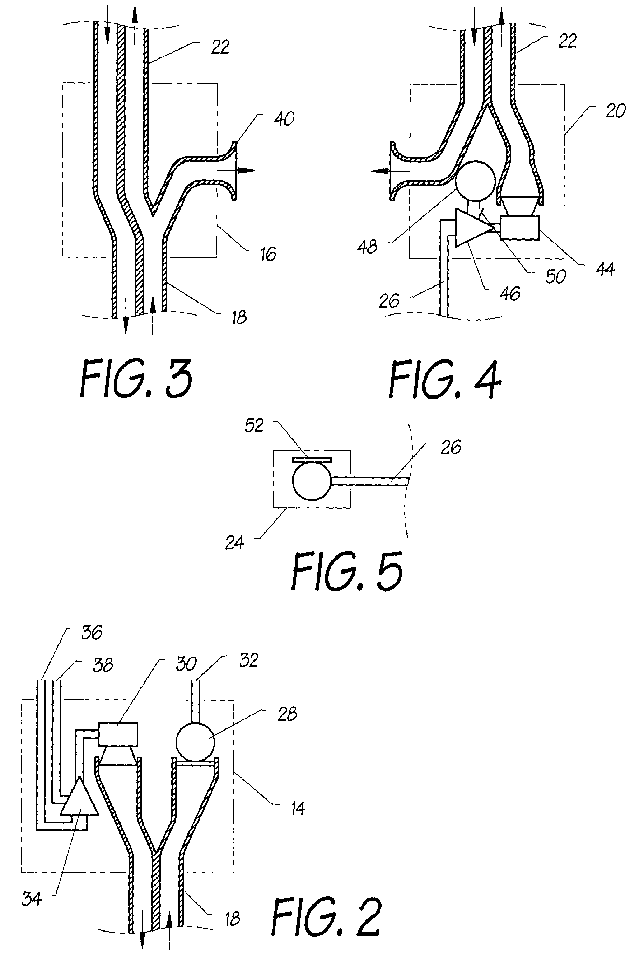

Referring now to Figure 2, inside the adapter module 14, the ends of the twin-bore tube 18 are separated and flared and fitted with a microphone 28 and miniature loudspeaker 30, respectively. The microphone 28 is connected, in use, by a pair of terminals 32 to a microphone input of a hands-free socket of the mobile telephone 10. The adapter module 14 also includes an amplifier 34. The output of the amplifier 34 is connected to the loudspeaker 30. The amplifier 34 receives its input from a pair of terminals 36 which, in use, are connected to a loudspeaker output of the hands-free socket of the mobile telephone 10. The amplifier 34 receives power via a pair of terminals 38 which, in use, are connected to power output terminals of the hands-free socket of the mobile telephone 10.

Referring now to Figure 3, in the right earpiece module 16, there is continuity between the two bores of the tube 18 and respective bores of the tube 22. However, the bore of the tube 18 which is connected to the loudspeaker 30 in the adapter module 14 also branches out to form an acoustic outlet 40 which is directed to the user's right ear when the headset 25 is properly positioned on the user's head.

Referring now to Figure 4, in the left earpiece module 20, the two bores of the tube 22 are separated, and the bore which is connected to the loudspeaker 30 in the adapter module forms an acoustic outlet 42 which is directed to the user's left ear when the headset 25 is properly positioned on the user's head. The end of the other bore is flared and fitted with a miniature loudspeaker 44 which is driven by an amplifier 46. The amplifier 46 receives power from a button cell 48 via an on-off switch 50, both provided in the left earpiece module 20.

Referring now to Figure 5, the mouthpiece module 24 contains a microphone 52 which is positioned to pick up the user's voice when the headset 25 is properly positioned on the user's head. The microphone 52 is connected by the twin-core cable 26 to the input of the amplifier 46 in the left earpiece module 20.

In use of the accessory 12 shown in Figures 1 to 5, the headset 25 is worn on the user's head, with the on-off switch 50 switched on, and a call is established between the mobile telephone 10 and another party. The telephone 10 is carried away from the user's head, for example in the hand, clipped to the user's waistband or carried in their handbag. When the user speaks, their voice is converted by the microphone 52 to an electrical signal which is amplified by the amplifier 46 and then converted to an acoustic signal by the loudspeaker 44. The acoustic signal is fed by the twin-bore tubes 22,18 to the microphone 28, where it is converted to an electrical signal which is supplied, via the terminals 32, to the telephone 10 for transmission to the other party to the telephone call. Conversely, when the other party speaks, the telephone 10 supplies an electrical signal, via the terminals 36, which is amplified by the amplifier 34 and then converted to an acoustic signal by the loudspeaker 30. The acoustic signal is fed by the twin-bore tube 18 to the right acoustic outlet 40 and also by the twin-bore tube 22 to the left acoustic outlet 42 so that the user can hear the other party. It will therefore be appreciated that the accessory 12 can be used without the mobile telephone 10 being close to the user's head and that the accessory 12 does not include any wires electrically connecting the mobile telephone 10 to the headset 25 on the user's head.

It should be noted that many modifications and developments may be made to the embodiment of the invention described above.

For example, rather than using acoustic links between the mobile telephone 10 and the headset, optical links may be used, employing optical fibres instead of the acoustic tubes 18,22. In this case, the loudspeaker 30 in the adapter module 14 would be replaced by, for example, a light emitting diode, and in each of the right and left earpiece modules 16,20, a photodiode, amplifier and miniature loudspeaker would be included. Also, the loudspeaker 44 in the left earpiece module 20 would be replaced by, for example, a light emitting diode, and in the adapter module 14, the microphone 28 would be replaced by, for example, a photodiode and, if required, an amplifier.

Instead of a full, two-earpiece headset 25, a single earpiece may be provided which is fitted into the user's ear, and the microphone 52, amplifier 46, loudspeaker 44, button cell 48 and switch 50 may be provided in a single module which is, for example, clipped to the user's clothing, for example to their lapel or shirt.

It should be noted that the embodiment of the invention, and the developments to it, have been described above purely by way of example and that many other modifications and developments may be made thereto within the scope of the present invention.

## Claims

1. An accessory (12) for a mobile radio transmitter (10), comprising a first transducer (24,26,20) for detecting a user's voice and producing a corresponding wire-less signal, and a wire-less link (22,18) from the first transducer to a second transducer (14) for detecting the wire-less signal and producing a corresponding electrical signal for supply to an electrical input of the mobile radio transmitter.

2. An accessory as claimed in claim 1, wherein the wire-less link is a physically-closed point-to-point link from the first transducer to the second transducer.

3. An accessory as claimed in claim 1 or 2, wherein the first transducer includes a microphone (52).

4. An accessory as claimed in claim 3, wherein: the first transducer includes an electro-acoustic transducer (44); the wire-less link is an acoustic link; and the second transducer includes a microphone (28).

5. An accessory as claimed in claim 3, wherein: the first transducer includes an electro-optical transducer; the wire-less link is an optical link; and the second transducer includes an opto-electrical transducer.

6. An accessory as claimed in any preceding claim for a mobile radio transceiver (10), further comprising a third transducer (30) for receiving an electrical signal from an electrical output of the mobile radio transceiver and producing a corresponding second wire-less signal for supply via a second wire-less link (18,22,40) to the user's ear.

7. An accessory as claimed in claim 6, wherein the second wire-less link is a physically-closed point-to-point link from the third transducer to the user's ear.

8. An accessory as claimed in claim 6 or 7, wherein the third transducer includes an electro-acoustic transducer (30) and the second wireless link is an acoustic link.

9. An accessory as claimed in claim 4 or 8, wherein the, or each, acoustic link is provided by a, or a respective, flexible tube (18,22).

10. An accessory as claimed in claim 6 or 7, wherein: the third transducer includes an electro-optical transducer; the second wire-less link is an optical link; and the accessory further includes a fourth opto-acoustic transducer fed by the second wire-less link for providing a corresponding acoustic signal to the user's ear.

11. An accessory as claimed in claim 5 or 10, wherein the, or each, optical link is fibre-optic.
